# FASCICULE DE BREVET EUROPEEN

(11) **EP 2 227 971 B1**
(45) Date de publication et mention de la délivrance du brevet: **21.08.2019**
(21) Numéro de dépôt: 09305218.1
(22) Date de dépôt: 10.03.2009
(51) Int. Cl.: A23N 12/02, B08B 3/02

(54) **Installation et procédé de lavage de légumes à feuilles**
Anlage und Verfahren zum Waschen von Blattgemüse
Installation and method for washing leafy vegetables.

(43) Date de publication de la demande: 15.09.2010
(73) Titulaire: FLORETTE Holding, 50430 Lessay (FR)
(72) Inventeur: Savary, Laurent, 50430, Angoville sur Ay (FR)
(74) Mandataire: Cabinet HERRBURGER

(56) Documents cités:
- EP-A- 1 449 444
- US-A- 1 708 057
- US-A- 2 014 053
- US-A- 2 197 978
- US-A- 2 580 420
- US-A- 2 666 711

## Description

L'invention concerne le domaine des installations et des procédés de lavage de légumes à feuilles tels que des salades, des choux, des poireaux, des épinards ou de l'oseille, et en particulier des feuilles de légumes souples et fragiles tels que des morceaux de salade découpés.

Le lavage vise à éliminer mécaniquement des éléments halogènes solides ou des impuretés telles que du sable, des petits morceaux de végétaux, des pierres, des insectes, des chenilles, des escargots, des limaces ou des pucerons. De telles impuretés peuvent être fortement accrochées sur la surface des feuilles des légumes.

Par la demande de brevet FR 2 877 188, on connaît un procédé de lavage de salade dans lequel on introduit un lot de salades dans un panier perforé puis on plonge successivement le panier perforé dans une série de bains de lavage en faisant tourner le panier. L'agitation de la salade crée un effet mécanique pour décoller les impuretés.

Dans d'autres procédés de lavage, l'agitation de la salade peut être obtenue en créant des bulles d'air ou des courants d'eau dans le bain de lavage.

Les procédés précités de lavage par immersion dans un bain d'eau de lavage présentent une série d'inconvénients qui se manifestent à chaque étape du chemin suivi par les impuretés et/ou les pucerons lors du lavage.

Tout d'abord, une première limite des procédés précités vient du fait que l'efficacité du décollement des impuretés est limitée par la fragilité des feuilles de légumes à laver. L'agitation mécanique nécessaire au décollement des impuretés peut être trop violente et risque de blesser les feuilles. Cela peut réduire la durée de consommation du légume lavé. Lorsqu'on limite l'agitation mécanique à ce que peuvent supporter les feuilles de légumes, le risque existe que les impuretés ou les pucerons restent accrochés aux feuilles.

Un autre inconvénient vient du risque de contamination. Les impuretés détachées des feuilles de légumes peuvent migrer dans la totalité du bain de lavage. Ainsi, un légume particulièrement sale ou pollué peut contaminer la totalité d'un lot de feuilles de légume en cours de lavage.

Un autre inconvénient des procédés de lavage par immersion vient du fait que, une fois décrochés des feuilles de légumes, les pucerons suivent le même flux que les feuilles de légumes lavées. Par exemple, de la salade lavée peut être retirée du bain de lavage en remontant le panier contenant la salade immergée. Alternativement, dans un procédé appelé « dégrillage », un tapis grillagé entraîne progressivement la salade lavée hors du bain de lavage. Dans les deux cas, l'eau s'écoule naturellement de la salade. Seule une faible proportion des pucerons décollés par le lavage est évacuée par l'écoulement de l'eau.

Un autre inconvénient du procédé de lavage par immersion vient de l'évacuation des pucerons et des impuretés. Les impuretés flottantes peuvent être évacuées par trop-plein. Les impuretés lourdes peuvent se décanter au fond du bain de lavage. Cela ne supprime pas la nécessité de filtrer l'ensemble de l'eau de lavage. Des bacs de lavage industriels de salade font par exemple 3 m³. Les installations de lavage peuvent comprendre des pompes à eau dont le débit est de l'ordre de 120 m³/h. Pour de tels débits, il est difficile de filtrer des particules plus fines que 100µm. Lors de la recirculation de l'eau, le filtrage est trop grossier pour éviter aux pucerons ou à des morceaux de pucerons de se retrouver de nouveau en contact avec la salade.

Par ailleurs, l'essorage, après égouttement de la salade immergée, peut se faire par centrifugeuse. Les pompes haut débit et les souffleries provoquent un échauffement de l'eau de lavage qui doit être compensé par un apport d'eau propre et froide.

« Outre le nettoyage de légumes à feuilles tels que des salades, des choux, etc... par lavage par immersion, il est connu de laver ces produits à feuilles dans des installations utilisant des jets d'eau.

Ainsi, le document EP 1 449 441 A2 décrit une installation comportant un convoyeur sans fin pour transporter des feuilles de produits tels que des végétaux en une couche unique pour faire passer cette couche unique sous des jets d'eau et sur des jets d'eau 31, 31'. Puis l'eau est recueillie et remise en circulation. Des quantités importantes d'eau sont utilisées pour ce lavage. Les jets d'eau exercent un traitement brutal sur les feuilles en risquant d'abimer les feuilles fragiles du fait de l'énergie cinétique importante des jets d'eau. Cela se traduit par une mauvaise qualité des produits en sortie de lavage se répercutant sur leur conservation, leur état de fraîcheur et leurs propriétés organoleptiques.

Le document US 2 014 053 décrit également une installation de lavage de végétaux en feuilles consistant à projeter sur les feuilles des jets d'eau fins et puissants. Ce procédé de lavage a les mêmes inconvénients que ceux examinés ci-dessus, à savoir qu'il abime les produits sans pour autant garantir l'efficacité du nettoyage ou d'éviter une recontamination des produits du fait de circulation d'une quantité d'eau importante sur les feuilles et par conséquence, d'une quantité d'eau importante dans le circuit de nettoyage ».

L'invention propose une installation et un procédé de lavage de légumes à feuilles et en particulier de feuilles de légumes souples et fragiles, remédiant aux inconvénients précités et en particulier facilitant l'évacuation des impuretés desdites feuilles.

Selon un mode de réalisation, l'installation de lavage de légumes à feuilles, tels que de la salade, comprend un convoyeur à bande grillagée conçu pour l'égouttement de feuilles de légumes. L'installation comprend un moyen d'étalement sensiblement monocouches des feuilles de légume sur la bande grillagée et un dispositif d'arrosage en gouttes des feuilles de légumes l'énergie cinétique des gouttes étant acquise uniquement par gravité, le dispositif d'arrosage comprenant un bac d'eau à air libre et une série de buses d'arrosage alimentées en eau par le bac et disposées au-dessus du convoyeur.

L'arrosage en gouttes provoque une succession de petits impacts sur les feuilles à laver. Si l'impureté se trouve sous la goutte, l'impact peut suffire à la détacher. La succession de gouttes d'eau mets en vibration les feuilles de légumes qui, dans le cas de salade par exemple, sont très souples. Cette vibration facilite le décollement des impuretés. De plus, la goutte d'eau tombée éclate en une multitude de petites gouttes d'eau de rebond qui à leur tour peuvent décoller des impuretés. Les gouttes d'eau d'arrosage et les gouttes d'eau de rebond impactent directement les impuretés à décoller. Ainsi, l'énergie mécanique de décollement est élevée pour un volume d'eau limité au volume des gouttes. Cela limite la quantité d'eau nécessaire au décollement. Cela permet de filtrer une quantité réduite d'eau. Cela permet un filtrage plus fin évitant la contamination des feuilles par l'eau d'alimentation du dispositif d'arrosage.

De plus, le fait que les feuilles soient étalées sur sensiblement une seule couche fait que les impuretés décollées ne sont pas emprisonnées par d'autres feuilles à laver. Les gouttes et les impuretés décollées s'écoulent directement à travers la bande grillagée. L'eau et les impuretés décollées ne tombent pas dans un bain d'eau en contact avec les feuilles. Cela réduit les risques de contamination. Cela permet de séparer les impuretés et/ou les pucerons des feuilles à laver dès leur décollement des feuilles.

Selon une variante, l'installation comprend un dispositif d'aspiration d'air disposé sous la bande grillagée, destiné à accélérer l'écoulement des gouttes d'eau à travers les feuilles et la bande grillagée. Cela entraîne l'eau issue des gouttes d'arrosage dès que ces gouttes ont fini leur travail de décollement potentiel par l'impact initial et l'impact des gouttes de rebond.

Avantageusement, le débit d'arrosage et/ou le débit d'aspiration sont ajustés de manière à éviter qu'un film d'eau ne se forme à la surface des feuilles. Cela permet que des impacts de nouvelles gouttes atteignent directement la surface des feuilles à laver sans que celle-ci soit masquée par un film d'eau issu des gouttes d'eau précédentes.

Avantageusement, l'installation comprend une série de rangées de buses d'arrosage. Chaque rangée de buses est constituée par une pluralité de buses alignées transversalement par rapport au défilement de la bande grillagée, espacées selon un pas transversal et couvrant la largeur d'étalement des feuilles à laver. Les buses de deux rangées, adjacentes dans le sens de défilement de la bande grillagée, sont décalées l'une par rapport à l'autre d'une portion dudit pas transversal. Cela permet à chaque cm² de feuille à laver de se trouver à la verticale d'une buse d'arrosage à un moment ou à un autre du défilement des feuilles à laver sur la bande de grillage.

Avantageusement, plusieurs séries de rangées de buses peuvent se succéder de façon que chaque cm² puisse se trouver plusieurs fois à la verticale d'une buse d'arrosage. Une surface élémentaire de feuilles est arrosée plusieurs fois, séparée par une période telle que l'eau d'arrosage ait le temps de s'égoutter. Cela améliore l'efficacité du nettoyage sans augmenter la blessure des feuilles issue de ce nettoyage.

Selon un mode de réalisation, les buses d'arrosage sont des tubes cylindriques d'axes verticaux présentant chacun une ouverture disposée à la hauteur du niveau libre d'eau dans le bac.

Avantageusement, l'installation comprend une première partie de buses d'arrosage dans laquelle la hauteur séparant le niveau libre d'eau de la bande du convoyeur et/ou la longueur et/ou le diamètre des tubes cylindriques desdites buses de première partie sont conçus pour maximiser le volume des gouttes d'eau issues desdites buses de première partie. Cela permet de maximiser l'impact du décollement des gouttes issues desdites buses.

Avantageusement, l'installation comprend une deuxième partie de buses d'arrosage dans laquelle la hauteur séparant le niveau libre d'eau de la bande du convoyeur et/ou la longueur et/ou le diamètre des tubes cylindriques desdites buses de deuxième partie sont conçus pour ajuter la fréquence temporelle des gouttes d'eau issues desdites buses de deuxième partie, à une valeur proche de la fréquence propre de vibration mécanique des feuilles à laver. Cela permet de maximiser la mise en vibration des feuilles. Cela contribue au décollement de plaques de terre collées sur une telle surface vibrante. Cela augmente la vitesse d'impact de la goutte de lavage sur la feuille.

Selon un mode de réalisation, le moyen d'étalement comprend un dispositif de mise en vibration de la bande grillagée. Ainsi, des feuilles empilées les unes sur les autres glissent et s'étalent les unes à côté des autres.

Selon un mode de réalisation, l'installation comprend un premier et un deuxième ensemble équipé chacun d'un convoyeur et d'un dispositif d'arrosage associé. Les deux ensembles sont séparés par un dispositif de retournement des feuilles de légume. Ainsi, chaque feuille peut être lavée des deux côtés.

Avantageusement, le moyen de retournement comprend des jets d'air disposés autour d'une extrémité du convoyeur du premier ensemble, le convoyeur du deuxième ensemble étant disposé sous ladite extrémité.

Selon un autre aspect, l'invention porte également sur un procédé de lavage de légumes à feuilles dans lequel on dispose les feuilles de légume sur un grillage pour égoutter l'eau ruisselant des feuilles.

Avantageusement, on étale les feuilles de légume sensiblement côte à côte sur le grillage et on arrose les feuilles de légume étalées par des gouttes d'eau. Ces gouttes d'eau sont générées par des buses d'arrosage alimentées en eau à la pression atmosphérique.

Avantageusement, préalablement à l'égouttement, les feuilles ne sont pas plongées dans un bain d'eau. Cela réduit grandement les risques de contamination et la quantité d'eau à filtrer issue du lavage. Cela permet de filtrer l'eau de lavage de manière plus fine, et réduit encore les risques de contamination de l'eau des gouttes de lavage.

Avantageusement, le procédé comprend, préalablement à l'arrosage/ égouttement, une étape d'étalement sensiblement monocouche des feuilles.

Selon un mode de réalisation, le procédé comprend une première phase d'arrosage/égouttement suivi d'un retournement des feuilles puis d'une deuxième pha-45 se d'arrosage/égouttement

D'autres caractéristiques et avantages de l'invention apparaîtront à la lecture de la description détaillée de quelques modes de réalisation pris à titre d'exemples non limitatifs, et illustrés par les dessins annexés, selon lesquels :
- la figure 1 est un schéma d'ensemble illustrant l'installation ;
- la figure 2 est un schéma illustrant le mode d'action des gouttes d'arrosage ; et
- la figure 3 illustre la répartition des buses d'arrosage.

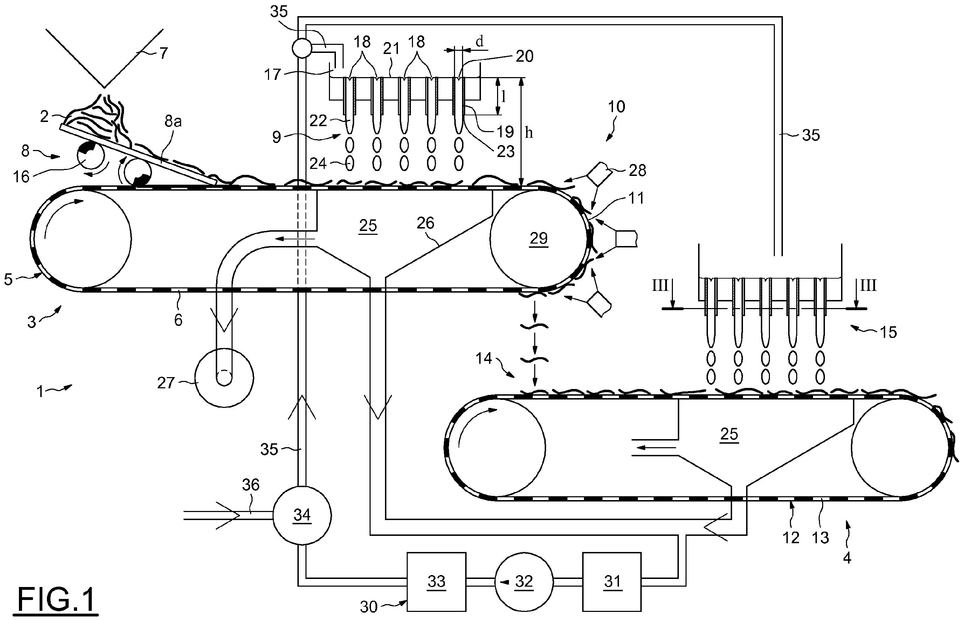

Comme illustré en figure 1, l'installation 1 de lavage de feuilles de légumes 2 comprend un premier ensemble de lavage 3 situé en haut à gauche de la figure 1, et un deuxième ensemble de lavage 4 situé en bas à droite de la figure 1. Le premier ensemble de lavage 3 comprend un convoyeur 5 équipé d'une bande grillagée le long de laquelle sont disposés dans le sens de défilement de la bande grillagée 6, un moyen de réception 7 des feuilles à laver 2, un moyen d'étalement 8 des feuilles à laver disposées au-dessus de la bande grillagée 6, un dispositif de lavage 9 et un dispositif de retournement des feuilles 10 situé à l'extrémité 11 du convoyeur 5 opposé au moyen de réception 7.

Le deuxième ensemble de lavage 4 comprend un convoyeur 12 équipée d'une bande grillagée 13 similaire à la bande grillagée 6. Le deuxième ensemble de lavage 4 comprend une zone de réception 14 des feuilles de légumes 2 située à la verticale de l'extrémité 11 du convoyeur 5 du premier ensemble 3. Le deuxième ensemble 4 comprend également un dispositif de lavage 15, similaire au dispositif de lavage 9 du premier ensemble 3 et situé en aval de la zone de réception 14 dans le sens de défilement de la bande grillagée 13.

Le moyen de réception 7 des feuilles de légumes 2 sur le premier convoyeur 5 peut comprendre par exemple une trémie telle qu'illustrée sur la figure 1, ou un convoyeur issu d'un autre poste de traitement des feuilles de légumes.

des feuilles de légumes 2 située à la verticale de l'extrémité 11 du convoyeur 5 du premier ensemble 3. Le deuxième ensemble 4 comprend également un dispositif de lavage 15, similaire au dispositif de lavage 9 du premier ensemble 3 et situé en aval de la zone de réception 14 dans le sens de défilement de la bande grillagée 13.

Le moyen de réception 7 des feuilles de légumes 2 sur le premier convoyeur 5 peut comprendre par exemple une trémie telle qu'illustrée sur la figure 1, ou un convoyeur issu d'un autre poste de traitement des feuilles de légumes.

Le moyen d'étalement 8 du premier ensemble de lavage 3 comprend une plaque vibrante 8a, mise en vibration par des masselottes rotatives 16 montées à rotation sur un support solidaire de la plaque vibrante 8a. Les feuilles de légumes 2, issues du moyen de réception 7 tombent sur la plaque vibrante 8a. La direction des vibrations est de préférence perpendiculaire au plan de la plaque vibrante 8a. Ainsi, des feuilles de légumes 2 empilées les unes sur les autres tendent naturellement à glisser les unes par rapport aux autres et à s'étaler les unes à côté des autres. La plaque vibrante 8a peut être légèrement inclinée. Les vibrations provoquent, non seulement l'étalement relatif des feuilles 2, mais également leur translation en bloc sur la plaque vibrante 8a. Les feuilles 2 de légumes tombent sur la bande grillagée 6 du convoyeur 5, à l'état étalé. La largeur sur laquelle tombent les feuilles étalées définit une surface d'étalement de la bande grillagée 6.

On va maintenant décrire les dispositifs de lavage 9 et 15 des premier et deuxième ensembles de lavage 3 et 4. Chacun des dispositifs de lavage 9, 15 comprend un bac d'eau 17 à air libre et une série de buses d'arrosage 18 alimentées en eau par le bac 17 et disposées au dessus d'une zone de lavage du convoyeur 5 ou 12.

Chacune des buses d'arrosage 18 est constituée par un tube cylindrique 19 d'axe vertical et présentant une extrémité supérieure 20 sensiblement à la hauteur du niveau libre 21 d'eau dans le bac d'eau 17. Les tubes cylindriques 19 sont fixes par rapport au bac d'eau 17 de sorte que, quand le niveau d'eau augmente dans le bac 17, de l'eau s'engouffre à pression atmosphérique dans l'extrémité supérieure 20 du tube cylindrique 19. Le tube cylindrique 19 présente un diamètre « d » de l'extrémité supérieure 20 et une longueur « 1 » telle que l'eau, s'engouffrant à pression et vitesse sensiblement nulle par l'extrémité supérieure 20, est guidée dans l'intérieur du tube cylindrique 19 en un écoulement le moins turbulent possible. Cela permet de constituer une colonne d'eau 22 suffisamment stable pour continuer à s'écouler sous forme de colonne continue d'eau une fois sortie d'une extrémité base 23 du tube cylindrique 19. La tension superficielle de l'eau fait que la colonne continue d'eau 22 se transforme naturellement en une succession de gouttes d'eau 24. Plus la colonne d'eau 22 est stable, plus les gouttes d'eau 24 présentent un volume important. Le niveau libre d'eau 21 est disposé à une hauteur « h » au dessus des bandes grillagées 6 ou 13. Le volume de chacune des gouttes d'eau 24 et la hauteur de chute « h » déterminent l'énergie cinétique emmagasinée par chacune des gouttes d'eau 24. Le fait que cette énergie cinétique soit acquise quasiment uniquement par gravité permet de réduire la turbulence de la colonne d'eau 22 avant la formation des gouttes d'eau. Ainsi, l'énergie libérable par chacune des gouttes d'eau 24 est douce et évite de blesser les feuilles fragiles de légumes.

Autrement dit, l'énergie cinétique des gouttes d'eau est obtenue de manière totalement opposée au nettoyage sous haute pression.

Les dispositifs de lavage 9 et 15 comprennent également chacun un dispositif d'aspiration d'air 25 disposé sous la bande grillagée correspondante 6, 13. Le dispositif d'aspiration 25 comprend une trémie de récupération d'eau 26 reliée à un extracteur d'air 27. La trémie de récupération d'eau 26 est disposée à la verticale des buses d'arrosage 18.

Le dispositif de retournement des feuilles 10 comprend une série de jets d'air 28 disposés autour d'un tambour 29 autour duquel tourne la bande grillagée 6. Les jets d'air 28 sont disposés de manière que l'air projeté sur la bande grillagée 6 constitue une zone de plaquage des feuilles 2 qui s'étend sur un demi-périmètre du tambour 29. Ainsi, lorsqu'une feuille de légume 2, ayant traversé le dispositif de lavage 9 puis la zone de plaquage des jets d'air 26, celle-ci se trouve retournée et tombe naturellement par gravité sur la bande grillagée 13 du deuxième ensemble de lavage 4.

L'installation 1 comprend également un dispositif de filtrage 30 comprenant par exemple un filtre primaire 31 situé en amont d'une pompe hydraulique 32 et un filtre secondaire 33 situé en aval. Une vanne 34 et des canalisations d'alimentation 35 permettent d'amener l'eau filtrée vers les bacs d'eau 17 des premier et deuxième ensembles de lavage 3, 4. Une canalisation d'eau propre 36 permet de compenser l'humidité entraînée par les feuilles 2 lavées.

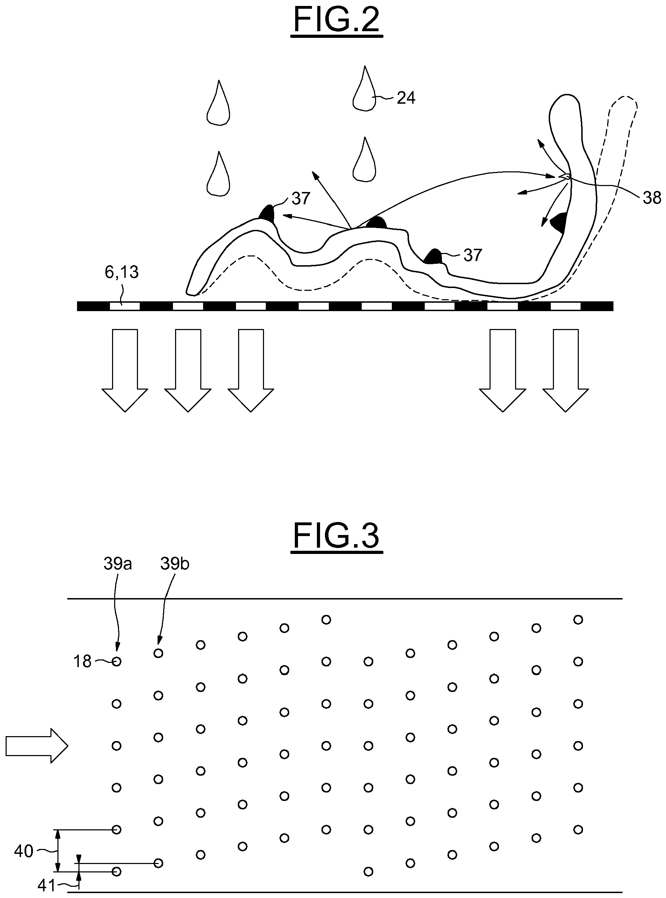

On va maintenant décrire, à l'aide des figures 2 et 3, la manière dont les gouttes d'arrosage 24 permettent de laver les feuilles de légumes 2. La feuille de légume 2 en cours de lavage présente en surface une série d'impuretés 37. L'énergie cinétique emmagasinée par chacune des gouttes d'eau 24 vient chasser par effet de souffle les impuretés 37 situées proche de l'impact. Les gouttes d'eau 24 éclatent alors en une pluralité de gouttes de rebond 38 pouvant à leur tour contribuer à souffler d'autres impuretés 37. De plus, contrairement à un jet d'eau de type Kärcher, le débit d'énergie cinétique fourni par chaque buse d'arrosage est constitué par une succession discrète d'impacts. Chacune des gouttes d'eau est individualisée de sorte que les impacts présentent une fréquence temporelle susceptible de mettre en vibration mécanique les feuilles de légumes 2 en cours de lavage, ainsi qu'illustré par la forme en pointillés. Ainsi, l'effet d'un arrosage par des gouttes d'eau est très différent de celui d'un jet d'eau continu ou sensiblement continu.

Le fait que les feuilles de légumes 2 soient disposées sensiblement côte à côte permet que chacune des gouttes d'eau 24, après avoir fourni son effet de nettoyage en souffle et en vibration de la feuille 2, ruissellent le long de la feuille 2 entraînant les impuretés 37 telles que des pucerons sans risquer de rencontrer et de se déposer sur d'autres feuilles.

Le dispositif d'aspiration 25 permet d'accélérer l'évacuation de l'humidité résultant du lavage et l'évacuation des impuretés 37.

Comme illustré en figure 3, les buses d'arrosage 18 sont disposées en une série de rangées 39a, 39b de busse d'arrosage. Chacune des rangées 39a, 39b est constituée par une pluralité de buses d'arrosage 18 alignées transversalement par rapport au défilement de la bande grillagée 6 ou 13 illustré par la flèche. Les buses 18 sont espacées avec un pas transversal 40. Le nombre de buses dans chaque rangée 39a, 39b permet de couvrir la largeur d'étalement des feuilles à laver. De plus, les buses d'arrosage 18 de deux rangées de buses 39a, 39b, adjacentes dans le sens de défilement de la bande grillagée 6, 13 sont décalées l'une par rapport à l'autre d'une portion 41 du pas transversal 40. Dans l'exemple illustré à la figure 3, chacune des rangées adjacentes est décalée d'1/6 du pas transversal de sorte que six rangées successives permettent d'assurer que chaque centimètre carré se trouvera, à un moment donné ou à un autre, à la verticale d'une buse d'arrosage 18.

Avantageusement, chaque bac d'eau 17 peut comprendre plusieurs séries de rangées de buses de manière que chaque centimètre carré de feuille de légume se trouve plusieurs fois successivement à la verticale d'une buse d'arrosage. Cela permet aux gouttes d'eau 24 et aux gouttes de rebond 38 de s'égoutter avant qu'une nouvelle goutte puisse provoquer un impact sur le même centimètre carré.

Dans un mode particulier de réalisation, les feuilles sont étalées sur une largeur de 15 à 80 cm de large, de préférence une largeur d'étalement de 20 à 50 cm et par exemple sur une largeur d'étalement de 28 à 36 cm de large.

Le pas transversal 40 des buses peut être de 40 à 70 mm, de préférence de 50 à 60 mm. Le décalage 41 entre deux rangées de buses adjacentes 39a, 39b peut être compris entre 1/10 et 1/3 et de préférence entre ¼ et 1/6 du pas transversal 40. Le diamètre intérieur « d » des tubes cylindriques 19 peut être compris entre 6 mm et 16 mm et de préférence compris entre 8 et 12 mm.

Le fait d'arroser les feuilles de légumes telles que des morceaux de feuilles de salade, par une série de gouttes d'eau 24 dont le volume a été maximisé et la fréquence temporelle d'impact réduite, permet de réduire fortement les blessures générées par le nettoyage, de faciliter l'écoulement d'eau et des impuretés entre deux impacts de gouttes et de réduire les risques de contamination au cours du lavage.

## Revendications

1. Installation (1) de lavage de légumes à feuilles (2), tels que de la salade, comprenant un convoyeur (5, 12) à bande grillagée (6, 13) conçu pour l'égouttement de feuilles de légumes, **caractérisée par le fait qu'**elle comprend un moyen d'étalement (8) sensiblement monocouche des feuilles (2) de légumes sur la bande grillagée (6, 13) et un dispositif d'arrosage (9, 15) en gouttes (24) des feuilles (2) de légumes, l'énergie cinétique des gouttes étant acquise uniquement par gravité, le dispositif d'arrosage (9, 15) comprenant un bac d'eau (17) à air libre et une série de buses d'arrosage (18) alimentées en eau par le bac (17) et disposées au-dessus du convoyeur (5, 12).

2. Installation selon la revendication 1, comprenant un dispositif d'aspiration d'air (25) disposé sous la bande grillagée (6, 13), destiné à accélérer l'écoulement des gouttes d'eau (24) à travers les feuilles (2) et la bande grillagée (6, 13).

3. Installation selon la revendication 2, dans laquelle le débit d'arrosage et/ou le débit d'aspiration sont ajustés de manière à éviter qu'un film d'eau ne se forme à la surface des feuilles (2).

4. Installation selon la revendication 1, comprenant une série de rangées (39a, 39b) de buses d'arrosage (28), chaque rangée de buses étant constituée par une pluralité de buses (18) alignées transversalement par rapport au défilement de la bande grillagée (6, 13), espacées selon un pas transversal (40), les buses de deux rangées (39a, 39b), adjacentes dans le sens de défilement de la bande grillagée (6, 13), étant décalées l'une par rapport à l'autre d'une portion (41) du pas transversal (40).

5. Installation selon la revendication 3 ou 4, dans laquelle les buses d'arrosage (18) sont des tubes cylindriques (19) d'axes verticaux présentant chacun une ouverture (20) disposée à la hauteur du niveau libre (21) d'eau dans le bac (17).

6. Installation selon la revendication 5, comprenant une *première partie* de buses d'arrosage (18) dont la hauteur (h) séparant le niveau libre (21) d'eau par rapport à la bande (6) du convoyeur et/ou la longueur (ℓ) et/ou le diamètre (d) des tubes cylindriques (19) de ces buses sont conçus pour maximiser le volume des gouttes d'eau (24) issues des buses (18) et/ou comprenant *une deuxième partie* de buses d'arrosage (18) dont la hauteur (h) séparant le niveau libre d'eau (21) par rapport à la bande (13) du convoyeur et/ou la longueur (ℓ) et/ou le diamètre (d) des tubes cylindriques (19) de ces buses sont conçus pour ajuster la fréquence temporelle des gouttes d'eau issues des buses.

7. Installation selon l'une des revendications 1 à 6, dans laquelle le moyen d'étalement (8) comprend un dispositif de mise en vibration (16) de la bande grillagée (6, 13).

8. Installation selon l'une des revendications 1 à 7, comprenant un premier (3) et un deuxième (4) ensemble équipé chacun d'un convoyeur et d'un dispositif d'arrosage associé, les deux ensembles (3, 4) étant séparés par un dispositif de retournement (10) des feuilles (2) de légumes.

9. Installation selon la revendication 8, dans laquelle le moyen de retournement (10) comprend des jets d'air (28) disposés autour d'une extrémité (11) du convoyeur (5) du premier ensemble (3), le convoyeur (12) du deuxième ensemble (4) étant disposé sous l'extrémité (11).

10. Procédé de lavage de légumes à feuilles dans lequel on dispose les feuilles (2) de légume sur un grillage (6, 13) pour égoutter l'eau ruisselant des feuilles (2), **caractérisé par le fait qu'**on étale les feuilles (2) de légume sensiblement côte à côte sur le grillage et on arrose les feuilles de légume étalées par des gouttes d'eau (24), dans lequel les gouttes d'eau (24) sont générées par des buses d'arrosage (18) alimentées en eau à la pression atmosphérique.

11. Procédé selon la revendication 10 dans lequel, préalablement à l'égouttement, les feuilles ne sont pas plongées dans un bain d'eau.

12. Procédé selon la revendication 10 ou 11, comprenant, préalablement à l'arrosage/égouttement, une étape d'étalement sensiblement monocouche des feuilles (2).

13. Procédé selon la revendication 11, comprenant une première phase d'arrosage/égouttement suivi d'un retournement des feuilles (2) puis d'une deuxième phase d'arrosage/égouttement.

## Patentansprüche

1. Anlage (1) zum Waschen von Blattgemüse (2), wie Salat, welche eine Förderanlage (5, 12) mit einem Gitterband (6, 13) umfasst, die zum Austropfen der Gemüseblätter ausgebildet ist, **dadurch gekennzeichnet, dass** sie ein Mittel (8) zur im Wesentlichen einschichtigen Ausbreitung der Gemüseblätter (2) auf das Gitterband (6, 13) und eine Vorrichtung zur Bewässerung (9, 15) in Tropfen (24) der Gemüseblätter (2) umfasst, wobei die kinetische Energie der Tropfen ausschließlich durch die Schwerkraft gewonnen wird, wobei die Vorrichtung zur Bewässerung (9, 15) ein Wasserbecken (17) mit freier Luft und eine Serie Bewässerungsdüsen (18), die durch das Becken (17) mit Wasser versorgt werden und über die Förderanlage (5, 12) angeordnet sind, umfasst.

2. Anlage gemäß Anspruch 1, welche eine Lufteinsaugungsvorrichtung (25) umfasst, die unter dem Gitterband (6, 13) angeordnet ist und dazu ausgebildet ist, die Strömung der Wassertropfen (24) durch die Blätter (2) und das Gitterband (6, 13) zu beschleunigen.

3. Anlage gemäß Anspruch 2, in welcher der Bewässerungsdurchfluss und/oder der Einsaugungsdurchfluss derart angepasst sind, um die Bildung eines Wasserfilms an der Oberfläche der Blätter (2) zu vermeiden.

4. Anlage gemäß Anspruch 1, welche eine Serie von Reihen (39a, 39b) Bewässerungsdüsen (28) umfasst, wobei jede Düsenreihe durch eine Vielzahl Düsen (18), die quer gegenüber dem Lauf des Gitterbands (6, 13) ausgerichtet sind und mit einem transversalen Abstand (40) beanstandet sind, gebildet ist, wobei die Düsen zweier Reihen (39a, 39b), die in der Laufrichtung des Gitterbands (6, 13) benachbart sind, um einen Teil (41) des transversalen Abstands (40) gegeneinander versetzt sind.

5. Anlage gemäß einem der Ansprüche 3 oder 4, in welcher die Bewässerungsdüsen (18) als zylindrische Röhre (19) mit vertikalen Achsen, die jeweils eine Öffnung (20) aufweisen, welche an der Höhe des freien Wasserspiegels (21) im Becken (17) angeordnet ist, ausgebildet sind.

6. Anlage gemäß Anspruch 5, welche einen ersten Teil Bewässerungsdüsen (18) umfasst, deren Höhe (h), die den freien Wasserspiegel (21) gegenüber dem Band (6) der Förderanlage abtrennt, und/oder die Länge (1) und/oder der Durchmesser (d) der zylindrischen Röhre (19) dieser Düsen dazu ausgebildet sind, um ein Volumen der Wassertropfen (24), die aus den Düsen (18) stammen, zu maximieren, und/oder einen zweiten Teil Bewässerungsdüsen (18) umfasst, deren Höhe (h), die den freien Wasserspiegel (21) gegenüber dem Band (13) der Förderanlage abtrennt, und/oder die Länge (l) und/oder der Durchmesser (d) der zylindrischen Röhre (19) dieser Düsen dazu ausgebildet sind, um eine zeitliche Frequenz der Wassertropfen, die aus den Düsen (18) stammen, anzupassen.

7. Anlage gemäß einem der Ansprüche 1 bis 6, in welcher das Mittel zur Ausbreitung (8) eine Vorrichtung (16) zur Versetzung des Gitterbands (6, 13) in Schwingung umfasst.

8. Anlage gemäß einem der Ansprüche 1 bis 7, welche eine erste (3) und eine zweite (4) Anordnung umfasst, die jeweils mit einer Förderanlage und mit einer damit verbundenen Bewässerungsvorrichtung versehen sind, wobei die zwei Anordnungen (3, 4) durch eine Vorrichtung (10) zur Wendung der Gemüseblätter (2) getrennt sind.

9. Anlage gemäß Anspruch 8, wobei die Wendungsvorrichtung (10) Luftstrahlen (28) umfasst, die um ein Ende (11) der Förderanlage (5) der ersten Anordnung (3) herum angeordnet sind, wobei die Förderanlage (12) der zweiten Anordnung (4) unter dem Ende (11) angeordnet ist.

10. Verfahren zum Waschen von Blattgemüse, in welchem die Gemüseblätter (2) auf ein Gitter (6, 13) angeordnet werden, um das über die Blätter (2) strömende Wasser abzutropfen, **dadurch gekennzeichnet, dass** die Gemüseblätter (2) im Wesentlichen nebeneinander auf dem Gitter ausgebreitet werden und die ausgebreiteten Gemüseblätter durch Wassertropfen (24) bewässert werden, wobei die Wassertropfen (24) durch Bewässerungsdüsen (18) erzeugt werden, die mit Wasser bei Luftdruck versorgt werden.

11. Verfahren gemäß Anspruch 10, in welchem, vor dem Abtropfen, die Blätter nicht in ein Wasserbad eingetaucht werden.

12. Verfahren gemäß einem der Ansprüche 10 oder 11, welches, vor der Bewässerung/dem Abtropfen, ein im Wesentlichen einschichtiges Ausbreiten der Blätter (2) umfasst.

13. Verfahren gemäß Anspruch 11, welches eine erste Phase der Bewässerung/des Abtropfens, gefolgt von einer Wendung der Blätter (2) und dann von einer zweiten Phase der Bewässerung/des Abtropfens umfasst.

## Claims

1. Installation (1) for washing vegetables with leaves (2), such as salad, comprising a conveyor (5, 12) having a wire belt (6, 13) which is configured for drainage of vegetable leaves, **characterised in that** it comprises a substantially single-layer spreading means (8) for the vegetable leaves (2) on the wire belt (6, 13) and a device (9, 15) for spraying droplets (24) onto the vegetable leaves (2), the kinetic energy of the droplets being acquired purely by means of gravitational force, the spraying device (9, 15) comprising an open-air water bath (17) and a series of spraying nozzles (18) which are supplied with water by the bath (17) and which are arranged above the conveyor (5, 12).

2. Installation according to claim 1, comprising an air suction device (25) which is arranged below the wire belt (6, 13) and which is intended to accelerate the flow of the water droplets (24) through the leaves (2) and the wire belt (6, 13) .

3. Installation according to claim 2, wherein the spraying flow and/or the suction flow is/are adjusted in order to prevent a film of water from forming on the surface of the leaves (2).

4. Installation according to claim 1, comprising a series of rows (39a, 39b) of spraying nozzles (28), each row of nozzles being constituted by a plurality of nozzles (18) which are aligned transversely relative to the passage of the wire belt (6, 13) and which are spaced apart with a transverse pitch (40), the nozzles of two rows (39a, 39b) adjacent in the passage direction of the wire belt (6, 13) being offset relative to each other by a portion (41) of the transverse pitch (40).

5. Installation according to claim 3 or 4, wherein the spraying nozzles (18) are cylindrical tubes (19) which have vertical axes and which each have an opening (20) which is arranged at the height of the free water level (21) in the bath (17).

6. Installation according to claim 5, comprising a first spraying nozzle portion (18) whose height (h) separating the free water level (21) relative to the belt (6) of the conveyor and/or the length (*l*) and/or the diameter (d) of the cylindrical tubes (19) of these nozzles are configured to maximise the volume of the water droplets (24) originating from the nozzles (18) and/or comprising a second spraying nozzle portion (18) whose height (h) separating the free water level (21) relative to the belt (13) of the conveyor and/or the length (*l*) and/or the diameter (d) of the cylindrical tubes (19) of these nozzles are configured to adjust the time frequency of the water droplets originating from the nozzles.

7. Installation according to any one of claims 1 to 6, wherein the spreading means (8) comprises a device (16) for vibrating the wire belt (6, 13).

8. Installation according to any one of claims 1 to 7, comprising a first (3) and a second (4) assembly, each of which is provided with a conveyor and an associated spraying device, the two assemblies (3, 4) being separated by an inversion device (10) for the vegetable leaves (2).

9. Installation according to claim 8, wherein the inversion means (10) comprises air jets (28) which are arranged around an end (11) of the conveyor (5) of the first assembly (3), the conveyor (12) of the second assembly (4) being arranged below the end (11).

10. Method for washing vegetables with leaves, wherein the vegetable leaves (2) are arranged on a grid (6, 13) in order to drain the water trickling from the leaves (2), **characterised in that** the vegetable leaves (2) are spread substantially side by side on the grid and the spread vegetable leaves are sprayed with droplets of water (24), wherein the droplets of water (24) are generated by spraying nozzles (18) which are supplied with water at atmospheric pressure.

11. Method according to claim 10, wherein, prior to the drainage, the leaves are not immersed in a water bath.

12. Method according to claim 10 or 11, comprising, prior to the spraying/drainage, a step of substantially single-layered spreading of the leaves (2).

13. Method according to claim 11, comprising a first spraying/drainage step followed by inversion of the leaves (2) then a second spraying/drainage step.
